# EUROPÄISCHE PATENTSCHRIFT

(11) **EP 1 052 434 B1**
(45) Veröffentlichungstag und Bekanntmachung des Hinweises auf die Patenterteilung: **04.08.2004**
(21) Anmeldenummer: 00107454.1
(22) Anmeldetag: 06.04.2000
(51) Int. Cl.: F16H 63/42, B60K 35/00

(54) **Ganganzeigevorrichtung für ein automatisches Kraftfahrzeuggetriebe**
Gear indicator for an automatic transmission of a motor vehicle
Indicateur de vitessse pour une transmission automatique de véhicule automobile

(30) Priorität: 11.05.1999 DE 19921825
(43) Veröffentlichungstag der Anmeldung: 15.11.2000
(73) Patentinhaber: Dr.Ing. h.c.F. Porsche Aktiengesellschaft, 70435 Stuttgart (DE)
(72) Erfinder: Kraxner, Dieter, 75449 Wurmberg (DE)

(56) Entgegenhaltungen:
- EP-A- 0 361 011
- DE-C- 891 661
- US-A- 2 879 940
- PATENT ABSTRACTS OF JAPAN vol. 009, no. 132 (M-385), 7. Juni 1985 (1985-06-07) -& JP 60 015227 A (HONDA GIKEN KOGYO KK), 25. Januar 1985 (1985-01-25)

## Beschreibung

Die Erfindung betrifft eine Anzeigevorrichtung zur Anzeige von gewählten Gangstufen und Übersetzungen.

Eine gattungsgemäße Anzeigevorrichtung ist beispielsweise aus der EP 0 361 011 A1 bekannt. Diese Anzeigevorrichtung für ein automatisches Kraftfahrzeuggetriebe umfaßt neben ersten Anzeigeelementen zur Anzeige einer vorgewählten Fahrstufe zweite Anzeigeelemente. Die zweiten Anzeigeelemente machen insbesondere in einer halbautomatischen Betriebsweise des Kraftfahrzeuggetriebes mit manueller Wahl der Gangstufen eine aktuell eingelegte Gangstufe visuell kenntlich. Die ersten und zweiten Anzeigeelemente sind vorteilhaft in zwei senkrechten parallelen Reihen in einem Anzeigeinstrument des Kraftfahrzeugs angeordnet.

Nachteilig bei dieser bekannten Anzeigevorrichtung ist, daß sie zusätzlichen Raum im Anzeigeinstrument benötigt.

Gegenüber diesem Stand der Technik ist es Aufgabe der Erfindung, eine gattungsgemäße Anzeigevorrichtung zu schaffen, bei dem der zur Anzeige benötigte Flächenbedarf vermindert ist.

Diese Aufgabe wird erfindungsgemäß mit den Merkmalen des Patentanspruches 1 gelöst. Erfindungsgemäß wird vorgeschlagen, als Anzeigeelemente Skalenelemente wie Skalenziffern oder Teilungsstriche eines Anzeigeinstrumentes zu verwenden. Da diese Skalenelemente ohnehin vorhanden sind, benötigt die Anzeigevorrichtung zur Anzeige der gewählten Gangstufen keine oder nur wenig zusätzliche Fläche, je nach dem, ob alle Gang- oder Fahrstufen mit Hilfe der vorhandenen Skalenziffern darstellbar sind.

Vorteilhafte Weiterbildungen der Erfindung sind in den Unteransprüchen beschrieben.

So wird vorgeschlagen, als Anzeigeinstrument einen Drehzahlmesser zu verwenden. Die Skalenziffern eines Drehzahlmessers sind als Anzeigeelement zur Anzeige von Gangstufen besonders geeignet, da hier alle benötigten Ziffern in geordneter Reihe bereits vorhanden sind. Außerdem befindet sich der Drehzahlmesser als zentrales Anzeigeinstrument zumeist im unmittelbaren Sichtbereich des Fahrers, so daß die Anzeige der gewählten Gangstufen besonders deutlich möglich ist. Die Teilungsstriche der Skalenteilung kann zur Anzeige der gewählten Übersetzung beispielsweise in Verbindung mit einem stufenlosen Getriebe verwendet werden.

Wie weiterhin vorgeschlagen wird, kann die Anzeigevorrichtung dadurch realisiert sein, daß einzelne Skalenziffern zur Verwendung als Anzeigeelement mit einer Durchlichtbeleuchtung versehen werden. Zur Anzeige der gewählten Gangstufe wird dann die entsprechende Skalenziffer von hinten beleuchtet und erscheint dem Fahrer gegenüber den anderen, nicht verwendeten Skalenziffern erhellt. Um das gerade aktive Anzeigeelement auch bei eingeschalteter Instrumentenbeleuchtung von den nicht aktiven Anzeigeelementen abzuheben, wird schließlich vorgeschlagen, für die Durchlichtbeleuchtung eine andere Farbe als die Instrumentenbeleuchtung zu wählen. Durch diese Maßnahme ist das aktive Anzeigeelement sowohl bei Tag- wie auch bei Nachtfahrt gut zu erkennen. Insbesondere ist es auch möglich, die Anzeigenelemente mit einer als Durchlichtbleuchtung ausgeführten Instrumentenbeleuchtung zu kombinieren.

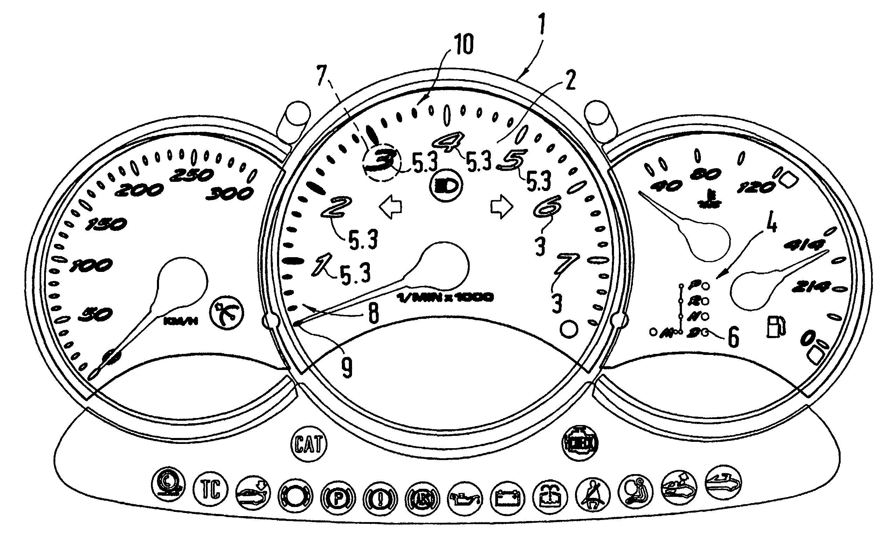

Die Erfindung ist nachstehend anhand des in der einzigen Figur dargestellten Ausführungsbeispieles näher erläutert.

Die einzige Figur zeigt einen Drehzahlmesser 1, wie er allgemein zur Verwendung in Kraftfahrzeugen bekannt ist. Der hier dargestellte Drehzahlmesser 1 weist einen Anzeigebereich 0 bis über 7.000 U/min auf. Dementsprechend sind in der Anzeige 2 Skalenziffern 3 von der Ziffer "0" bis zur Ziffer "7". In einem hier separat angeordneten Anzeigefeld 4 werden die bekannten Fahrstufen P, R, N, D dargestellt. Die Darstellung erfolgt in der Weise, wie diese Fahrbereiche auch mit Hilfe eines nicht dargestellten Wählhebels angewählt bzw. eingelegt werden können. Leuchtdioden 6 dienen zur Anzeige der ausgewählten Fahrstufe; alternativ können die Symbole des ersten Anzeigefeldes auch in Durchlichttechnik beleuchtet sein, wobei jeweils nur das der aktuell gewählten Fahrstufe entsprechende Symbol erleuchtet ist. Als zusätzliches Symbol ist im ersten Anzeigefeld 4 das Symbol M vorgesehen, das eine manuelle Betriebsart des nicht dargestellten Fahrzeuggetriebes anzeigt.

Bei nichtautomatisierten Fahrzeuggetrieben wird das erste Anzeigenfeld 4 nur zur Anzeige der Gangstufen "N" = Leerlauf und "R" = Rückwärtsgang verwendet oder das erste Anzeigenfeld 4 ist nicht vorgesehen bzw. wird nicht aktiviert.

Ausgewählten Skalenziffern 5 weisen die Werte 1, 2, 3, 4, 5 auf und sind korrespondierend zu den im Getriebe vorgesehenen Gangstufen 1 bis 5 gewählt. Bei einem 6-gängigen Getriebe wäre auch die Skalenziffer "6" als besondere Skalenziffer 5 auszuwählen usw. Das Anzeigefeld 4 sowie die ausgewählten Skalenziffern 5 bislen zusammen eine Anzeigevorrichtung für das Getriebe.

Durch eine an sich bekannte Durchlichteinrichtung werden die ausgewählten Skalenziffern 5 von hinten in Durchlichttechnik erleuchtet; die jeweils aktive Skalenziffer 5 erscheint dabei heller oder in anderer Farbe als die anderen Skalenziffern 3, 5.

Zur Steigerung der Auffälligkeit der Anzeige ist es im vorliegenden Beispiel vorgesehen, die ausgewählten Skalenziffern negativ, d.h. als schwarze Ziffern auf einem erleuchteten Grund darzustellen. Hierzu sind die Skalenziffern 3, 5 mit einer nicht lichtdurchlässigen, weißen Farbe auf das Ziffernblatt 2 aufgedruckt, während das beispielsweise hellgrau eingefärbte Zifferblatt 2 lichtdurchlässig ist. Der von der nicht dargestellten Lichtquelle erzeugte Lichtfleck 7 ist kreisförmig ausgebildet, so daß bei aktivem Anzeigeelement und eingeschalteter Lichtquelle die entsprechende Skalenziffer als dunkler Schattenriß gegenüber dem hellen Lichtfleck auftritt.

Bei Nachtfahrt ist das Zifferblatt 2 von hinten beleuchtet, so daß alle Skalenziffern 3, 5 sich als dunkler Schattenriß gegenüber dem gleichmäßig beleuchteten Zifferblatt 2 abheben. Um auch bei diesen Verhältnissen eine eindeutige Ablesbarkeit zu ermöglichen, ist die Farbe des Lichtflecks 7 deutlich anders - beispielsweise rot - gegenüber der Farbe der Hintergrundbeleuchtung - beispielsweise blau - gewählt.

Die Anzeigevorrichtung ist sowohl zur Verwendung in Verbindung mit einem automatischen oder automatisierten Fahrzeuggetriebe wie auch mit einem manuell bedienten Fahrzeuggetriebe geeignet.

Bei einer Verwendung mit einem stufenlosen Getriebe kann es ergänzend vorgesehen sein, daß eine Skalenteilung 8 zur Anzeige der aktuell eingestellten Getriebeübersetzung verwendet wird. Hierzu sind auch die Teilungsstriche 9 der Skalenteilung 8 in derselben Weise wie die Skalenziffern 5 beleuchtbar. Die Teilungsstriche 9 können dabei als Leuchtpunkt oder - wie in der einzigen Figur gezeigt - als Leuchtband 10 angesteuert werden. Im dargestellten Beispiel reicht das Leuchtband 10 bis zwischen die Skalenziffern 5 mit den Werten "3" und "4" und zeigt damit an, daß die aktuell am Getriebe eingestellte Übersetzung zischen einer Übersetzung für einen 3. Getriebegang und einer Übersetzung für einen 4. Getriebegang liegt. Auch bei einem stufenlosen Getriebe kann es sinnvoll sein, die Skalenziffern 5 zur Anzeige von gewählten Übersetzungen zu verwenden, wenn dieses mit einer Steuerung ausgestattet ist, die ein Stufengetriebe nachbildet.

## Patentansprüche

1. Anzeigevorrichtung für ein Kraftfahrzeuggetriebe zur Anzeige von gewählten Gangstufen und Übersetzungen, wobei ein Drehzahlmesser (1) mit einer Skalenteilung und zugeordneten Skalenziffern (3) zur Angabe von jeweils 1000 U/min je angegebener Skalenziffer enthält, wobei ein im Drehzahlmesser angeordneter Zeiger die aktuell gefahrene Drehzahl auf der Skalenteilung anzeigt, **dadurch gekennzeichnet, dass** die Skalenziffern (5.3) mit einer Durchlichtbeleuchtung versehen sind und zur Anzeige der gewählten Gangstufe die entsprechende Skalenziffer (5.3) von hinten beleuchtet ist.

2. Anzeigevorrichtung nach Anspruch 1, **dadurch gekennzeichnet, dass** die Skalenteilung Teilungsstriche (9) sind.

3. Anzeigevorrichtung nach Anspruch 1, **dadurch gekennzeichnet, dass** die Durchlichtbeleuchtung eine andere Farbe als die Instrumentenbeleuchtung aufweist.

## Claims

1. A display device for a gearbox of a motor vehicle for displaying selected gear speeds and gear ratios, wherein a revolution counter (1) comprises a dial graduation and associated dial figures (3) for indicating 1000 r.p.m. in each case per dial figure indicated, wherein a pointer arranged in the revolution counter displays the current rotational speed on the dial graduation, **characterized in that** the dial figures (5.3) are provided with a transillumination and, in order to display the gear speed selected, the corresponding dial figure (5.3) is illuminated from behind.

2. A display device according to Claim 1, **characterized in that** the dial graduation is formed by graduation divisions (9).

3. A display device according to Claim 1, **characterized in that** the transillumination has a different colour from the instrument illumination.

## Revendications

1. Dispositif d'affichage pour une transmission d'un véhicule automobile, destiné à l'affichage de crans de vitesse et de rapports sélectionnés, qui comporte un compte-tours (1) avec une échelle de division et des chiffres (3) associés pour l'indication de 1 000 tours/minute par chiffre indiqué de l'échelle, une aiguille disposée dans le compte-tours indiquant la vitesse de rotation actuelle sur l'échelle de division, **caractérisé en ce que** les chiffres (5.3) de l'échelle sont pourvus d'un éclairage par transmission et les chiffres (5.3) correspondants sont éclairés de l'arrière pour indiquer le rapport sélectionné.

2. Dispositif d'affichage selon la revendication 1, **caractérisé en ce que** l'échelle est divisée par des traits (9).

3. Dispositif d'affichage selon la revendication 1, **caractérisé en ce que** l'éclairage par transmission présente une autre couleur que l'éclairage des instruments de bord.
